# EUROPÄISCHE PATENTSCHRIFT

(11) **EP 0 674 132 B1**
(45) Veröffentlichungstag und Bekanntmachung des Hinweises auf die Patenterteilung: **29.11.1995**
(21) Anmeldenummer: 94104447.1
(22) Anmeldetag: 21.03.1994
(51) Int. Cl.: F16L 55/18, F16L 55/28

(54) **Einrichtung und Verfahren zum Abdichten einer Einmündungsstelle einer Rohrleitung in eine Sammelrohrleitung**
Device and process for sealing the junction where a branch pipe joins a main conduit
Dispositif et procédé pour étancher la zone de jonction d'un tuyau de dérivation dans un tuyau principal

(43) Veröffentlichungstag der Anmeldung: 27.09.1995
(73) Patentinhaber: PMO ENGINEERING AG, 8600 Dübendorf (CH)
(72) Erfinder: Müller, Paul, CH-8050 Zürich (CH)
(74) Vertreter: Steudtner, Werner, Dipl.-Ing.

(56) Entgegenhaltungen:
- EP-A- 0 253 588
- WO-A-83/02490
- WO-A-86/05569
- WO-A-90/55874
- CH-A- 676 495
- DE-A- 4 024 926
- GB-A- 2 147 682

## Beschreibung

Die Erfindung bezieht sich auf eine Abdichteinrichtung zum Abdichten einer reparaturbedürftigen Einmündungsstelle einer für Flüssigkeiten vorgesehenen Rohrleitung in eine Sammelrohrleitung mit einem in der Sammelrohrleitung bewegbaren Transportmittel und einem an dem Transportmittel angebrachten Abdichtmittelbehälter sowie mit dem Abdichtmittelbehälter in Verbindung stehenden Mitteln zur Zuführung von Abdichtmittel zu der abzudichtenden Einmündungsstelle und mit einer zum Abdecken der abzudichtenden Stelle vom Sammelrohrinnern her vorgesehenen, zur Verhinderung einer Entfernung des Abdichtmittels von der abzudichtenden Stelle in Richtung des Sammelrohrinnern dienenden Schalung, durch die hindurch das Abdichtmittel der abzudichtenden Stelle zugeführt wird, sowie Mitteln zur Verhinderung einer Entfernung des Abdichtmittels von der abzudichtenden Stelle in Richtung des Innern des einmündenden Rohres und Mitteln zur Positionierung der Schalung vom Sammelrohrinnern her an der abzudichtenden Stelle.

Einrichtungen dieser und ähnlicher Art sind u.a. aus der Europäischen Patentschrift 0396696 sowie den Europäischen Patentschriften 0204694, 0211825, 0411338 und den Schweizer Patentschriften 640623 und 676495 bekannt. Diese bekannten Abdichteinrichtungen haben den gemeinsamen Nachteil, dass sie die Schalung so lange an der abzudichtenden Stelle festhalten müssen, bis das in der Regel aus einem Zweikomponenten-Epoxidharz bestehende Abdichtmittel ausgehärtet ist. Da die Aushärtzeit in den meisten Fällen mehrere Stunden beträgt, ist die Abdichteinrichtung somit jeweils über mehrere Stunden an ein und dieselbe abzudichtende Stelle gebunden. Befinden sich nun beispielsweise an einer Sammelrohrleitung für Abwasser im Abstand von z.B. 30 m der Reihe nach eine grössere Anzahl von Hauszuleitungen, die alle im Zuge einer Sanierung der Kanalisation neu abgedichtet werden müssen, so ist dafür bei beispielsweise 50 neu abzudichtenden Hauszuleitungen und einer Aushärtzeit von beispielsweise drei Stunden ein Gesamtaufwand von über 150 Stunden bzw. bei einem 8-Stunden-Tag ein Gesamtzeitaufwand von etwa 20 Arbeitstagen oder (unter Einschluss der Feiertage) nahezu einem Arbeitsmonat erforderlich. Dieser hohe Zeitaufwand wurde insbesondere bei Sanierungsprojekten von schon vor vielen Jahrzehnten errichteten Kanalisationen, bei denen praktisch jede Hauszuleitung neu abgedichtet werden muss, als Nachteil des ansonsten wegen des Wegfalls von Tiefbauarbeiten durchaus vorteilhaften Abdichtverfahrens unter Verwendung von Einrichtungen der eingangs genannten Art angesehen.

Der Erfindung lag daher die Aufgabe zugrunde, eine Abdichteinrichtung der eingangs genannten Art zu schaffen, mit der dieser hohe Zeitaufwand wesentlich reduziert werden kann.

Erfindungsgemäss wird das mit einer Abdichteinrichtung der eingangs genannten Art erreicht, die gekennzeichnet ist durch Mittel zum Abkoppeln der Schalung sowie weiterer bei der Schalung verbleibenden Mittel nach ihrer Positionierung von den die Transportmittel und die Positionierungsmittel umfassenden bewegbaren Mitteln der Abdichteinrichtung und Mittel zum Halten der Schalung in ihrer Position während der Dauer des abgekoppelten Zustandes der Schalung, sowie zur Aufhebung der auf die Schalung wirkenden Kraft des der abzudichtenden Stelle zugeführten Abdichtmittels zur Verfestigung desselben.

Hauptvorteil der vorliegenden Abdichteinrichtung zum Abdichten einer Einmündungsstelle einer Rohrleitung in eine Sammmelrohrleitung ist die bedeutende Zeitersparnis, besonders bei Sanierungen der Kanalisation, bei denen eine grössere Anzahl von Hauszuleitungen nacheinander abgedichtet werden müssen, denn da die bewegbaren Mittel unmittelbar nach der Positionierung der Schalung sowie der Zuführung von Abdichtmittel zu der abzudichtenden Einmündungsstelle von der Schalung abgekoppelt werden können, wird für den Transport der Abdichteinrichtung mit der angekoppelten Schalung zu der Einmündungsstelle und das Positionieren der Schalung sowie die Zuführung des Abdichtmittels und das anschliessende Abkoppeln der bewegbaren Mittel von der Schalung und die Rückkehr der bewegbaren Mittel zu ihrem Ausgangspunkt und die dort vorzunehmende Ankoppelung einer neuen Schalung sowie das nachträgliche Abholen der Schalung nach der Aushärtung des Abdichtmittels gesamthaft im Durchschnitt nur eine halbe Stunde benötigt, so dass bei dem obengenannten Beispiel von 50 abzudichtenden Hauszuleitungen nur ein Zeitaufwand von 25 Stunden bzw. von ungefähr drei Arbeitstagen im Vergleich zu einem ganzen Arbeitsmonat bei der bekannten Abdichteinrichtung benötigt wird und damit eine Zeitersparnis von ca. 85% erzielt wird.

Bei einer bevorzugten Ausführungsform der vorliegenden Abdichteinrichtung umfassen die bewegbaren Mittel neben den die Transportmittel und den Abdichtmittelbehälter umfassenden, im wesentlichen in Achsrichtung der Sammelrohrleitung längsbewegbaren Mitteln zur Positionierung der Schalung vom Sammelrohrinneren her an der abzudichtenden Stelle an den längsbewegbaren Mitteln angebrachte Mittel zur Bewegung der Schalung quer zur Achsrichtung der Sammelrohrleitung und ebenfalls an den längsbewegbaren Mitteln angebrachte Mittel zur Bewegung der Schalung in Drehrichtung um die Achse der Sammelrohrleitung und ferner vorzugsweise eine an den längsbewegbaren Mitteln angebrachte, mit einem Monitor in einer Fernsteuerstelle in Verbindung stehende Videokamera zum Auffinden der abzudichtenden Einmündungsstelle der Rohrleitung sowie zur richtigen Positionierung der Schalung an dieser Einmündungsstelle. Die Positionierungsmittel haben den Vorteil, dass die Schalung leicht an jeder Stelle der Rohrinnenwand des Sammelrohres plaziert werden kann, wobei die Videokamera vorteilhaft ein leichtes Auffinden der Plazierungsstelle und eine Kontrolle der richtigen Plazierung ermöglicht.

Vorzugsweise umfassen die Mittel zum Abkoppeln der Schalung von den bewegbaren Mitteln mindestens eine an den Mitteln zur Bewegung der Schalung quer zur Achsrichtung der Sammelrohrleitung angebrachte Stange, vorzugsweise zwei zu einer Gabel zusammengefasste Stangen, und zur Einführung der Stangen vorgesehene Ausnehmungen in mit der Schalung verbundenen Tragorganen. Damit ergibt sich eine vorteilhafte, wenig aufwendige Ausbildung der Mittel zum Abkoppeln der Schalung.

Mit besonderem Vorteil können die Mittel zu Halten der Schalung in ihrer Position während der Dauer des abgekoppelten Zustandes der Schalung Abstützmittel zum Abstützen der Schalung an der Sammelrohrinnenwand umfassen. Solche Abstützmittel haben den Vorteil, dass die Schalung mit Hilfe der Abstützmittel fest an die abzudichtende Stelle angedrückt werden kann. Es besteht aber auch die vorteilhafte Möglichkeit, als Mittel zum Halten der Schalung in ihrer Position während der Dauer des abgekoppelten Zustandes der Schalung Mittel zur temporären Befestigung der Schalung an der Innenwand der in die Sammelrohrleitung einmündenden Rohrleitung zu benutzen.

Die genannten Abstützmittel können zweckmässig mindestens einen, vorzugsweise mehrere Druckluftzylinder mit durch Zuführung von Druckluft ausfahrbaren Kolbenstangen und Abstützflächen an den Kolbenstangenenden sowie in den Druckluftzylindern vorgesehenen Federmitteln zum Einziehen der Kolbenstangen bei Ablassen der Druckluft umfassen. Der Vorteil der Benutzung von Druckluftzylindern als Abstützmittel ist deren relativ leichte Steuerbarkeit und der daraus resultierende geringe Zeitaufwand für die Anbringung der Schalung.

Mit besonderem Vorteil können die die Transportmittel und die Positionierungsmittel umfassenden bewegbaren Mittel daher weiter eine Druckluftquelle umfassen, wobei zweckmässig Mittel zur Zuführung von Druckluft von der Druckluftquelle zu den Druckluftzylindern vorgesehen sind und diese Mittel zur Zuführung von Druckluft zu den Druckluftzylindern von den bewegbaren Mitteln abkoppelbare, mit den Druckluftzylindern fest in Verbindung stehende Druckluftzuführungsmittel umfassen.

Bei einer besonders vorteilhaften Ausbildung der vorliegenden Abdichteinrichtung umfassen die Mittel zur Verhinderung einer Entfernung des Abdichtmittels von der abzudichtenden Stelle in Richtung des Inneren des einmündenden Rohres eine in das einmündende Rohr einführbare und anschliessend aufblasbare Blase, vorzugsweise eine im aufgeblasenen Zustand die äussere Form eines dickwandigen Zylinders aufweisende, einen Flüssigkeitsdurchfluss von der Rohrleitung in die Sammelrohrleitung erlaubende Ringblase, und Mittel zur Zuführung von Druckluft zu der Blase, wobei zweckmässig Mittel zur Zuführung von Druckluft von der Druckluftquelle zu der Blase vorgesehen sind und diese Mittel zur Zuführung von Druckluft zu der Blase von den bewegbaren Mitteln abkoppelbare, mit der Blase fest in Verbindung stehende Druckluftzuführungsmittel umfassen. Die genannte Ringblase hat den besonderen Vorteil, dass sie einen Flüssigkeitsdurchlauf von der Rohrleitung in die Sammelrohrleitung erlaubt, wodurch ein Aufstauen von Abwasser in der Rohrleitung während des Verbleibens der Schalung an der abzudichtenden Stelle vermieden wird, und dass sie bei geeigneter Ausbildung zudem im obenerwähnten Sinne als Befestigungsmittel zur temporären Befestigung der Schalung an der Innenwand der in die Sammelrohrleitung einmündenden Rohrleitung benutzt werden kann.

Zweckmässig umfassen auch die mit dem Abdichtmittelbehälter in Verbindung stehenden Mittel zur Zuführung von Abdichtmittel zu der abzudichtenden Einmündungsstelle von den bewegbaren Mitteln abkoppelbare, mit der Schalung fest in Verbindung stehende Zuführungsmittel.

Die genannten von den bewegbaren Mitteln abkoppelbaren, mit dem Druckluftzylinder fest in Verbindung stehenden Druckluftzuführungsmittel und die genannten von den bewegbaren Mitteln abkoppelbaren, mit der Blase fest in Verbindung stehenden Druckluftzuführungsmittel und die genannten von den bewegbaren Mitteln abkoppelbaren, mit der Schalung fest in Verbindung stehenden, für das Abdichtmittel vorgesehenen Zuführungsmittel sind vorzugsweise an ihren von dem Druckluftzylinder bzw. der Blase bzw. der Schalung abgewandten Enden mit einem gemeinsamen Kopplungsorgan verbunden, das an die die Transportmittel, den Abdichtmittelbehälter und die Druckluftquelle umfassenden, im wesentlichen in Achsrichtung der Sammelrohrleitung längsbewegbaren Mittel ankoppelbar ist und über das der Druckluftzylinder und die Blase mit der Druckluftquelle und die mit der Schalung fest in Verbindung stehenden, für das Abdichtmittel vorgesehenen Zuführungsmittel mit dem Abdichtmittelbehälter verbindbar sind. Auch dieses Kopplungsorgan trägt vorteilhafterweise wesentlich zu einer Minimierung der erforderlichen Zeitdauer für das Anbringen der Schalung und das anschliessende Abkoppeln der bewegbaren Mittel der Einrichtung von der Schalung bei.

Die Erfindung betrifft weiter ein Verfahren zum Abdichten einer Einmündungsstelle einer für Flüssigkeiten vorgesehenen Rohrleitung in eine Sammelrohrleitung unter Verwendung der erfindungsgemässen Abdichteinrichtung. Der Vorteil des Verfahrens ist ebenso wie bei der erfindungsgemässen Einrichtung die schon erwähnte bedeutende Zeitersparnis bei der Anbringung einer Vielzahl von Schalungen.

Anhand der nachstehenden Figuren ist die Erfindung im folgenden an einem Ausführungsbeispiel näher erläutert. Es zeigen
- Fig.1: eine Seitenansicht einer Einrichtung nach der Erfindung mit der Sammelrohrleitung, der in diese einmündenden Rohrleitung, der abzudichtenden Einmündungsstelle und der Schalung im Schnitt,

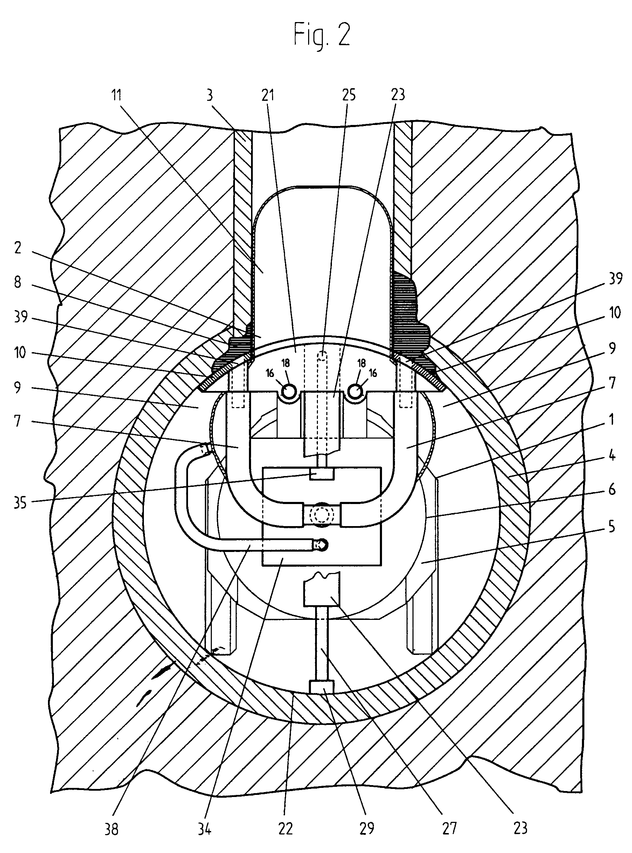

- Fig.2: die in Fig.1 gezeigte Einrichtung im Schnitt in der Ebene I-I.

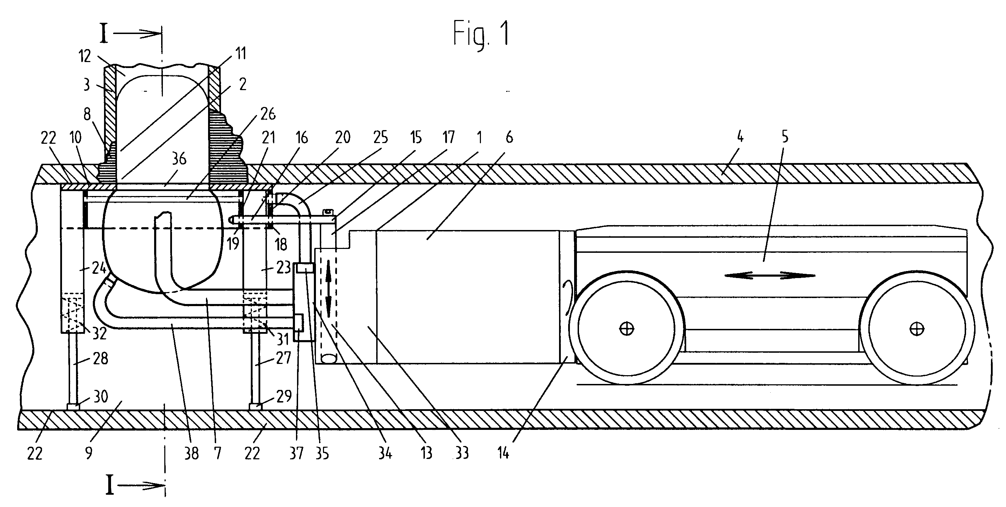

Die in Fig 1. gezeigte Einrichtung 1 zum Abdichten einer Einmündungsstelle 2 einer für Flüssigkeiten vorgesehenen Rohrleitung 3 in eine Sammelrohrleitung 4 umfasst einen in der Sammelrohrleitung 4 bewegbaren Transportwagen 5 und einen an dem Transportwagen 5 angebrachten Abdichtmittelbehälter 6 sowie mit dem Abdichtmittelbehälter 6 in Verbindung stehende Schläuche 7 zur Zuführung von Abdichtmittel 8 zu der abzudichtenden Einmündungsstelle 2 und eine zum Abdecken der abzudichtenden Stelle 2 vom Sammelrohrinnern 9 her vorgesehene, zur Verhinderung einer Entfernung des Abdichtmittels 8 von der abzudichtenden Stelle 2 in Richtung des Sammelrohrinneren 9 dienende Schalung 10 sowie eine Blase 11 zur Verhinderung einer Entfernung des Abdichtmittels 8 von der abzudichtenden Stelle 2 in Richtung des Inneren 12 des einmündenden Rohres 3 und Positionierungsmittel 5,13,14 zur Positionierung der Schalung 10 vom Sammelrohrinnern 9 her an der abzudichtenden Stelle 2 mit von dem Transportwagen 5 gebildeten Mitteln zur Positionierung in Achsrichtung der Sammelrohrleitung 4 und von einem Druckluftzylinder 13 gebildeten Mitteln zur Positionierung in Richtung quer zur Achsrichtung der Sammelrohrleitung 4 und von einem Drehtisch 14 zwischen Transportwagen 5 und Abdichtmittelbehälter 6 gebildeten Mitteln zur Positionierung in Drehrichtung um die Achse der Sammelrohrleitung 4 und einer in der Zeichnung nicht gezeigten, an den längsbewegbaren Mitteln 5,6 angebrachten, mit einem ebenfalls nicht gezeigten Monitor in einer Fernsteuerstelle in Verbindung stehenden Videokamera zum Auffinden der abzudichtenden Einmündungsstelle 2 der Rohrleitung 3 sowie zur richtigen Positionierung der Schalung 10 an der Einmündungsstelle 2 und ferner eine in der Zeichnung ebenfalls nicht gezeigte Druckluftquelle für den Druckluftzylinder 13 und des weiteren als Mittel zum Abkoppeln der Schalung 10 von den den Transportwagen 5 und die Positionierungsmittel 13,14 umfassenden bewegbaren Mitteln 5,13,14 der Einrichtung 1 zwei zu einer Gabel 15 zusammengefasste Stangen 16, die an der Kolbenstange 17 des Druckluftzylinders 13 angebracht sind und in Ausnehmungen 18,19 in mit der Schalung 10 verbundenen Tragorganen 20,21 einführbar und zum Abkoppeln aus diesen Ausnehmungen 18,19 herausziehbar sind, und ferner als Mittel zum Halten der Schalung 10 in ihrer Position während der Dauer des abgekoppelten Zustandes der Schalung 10 Abstützmittel 23-32 zum Abstützen der Schalung 10 an der Sammelrohrinnenwand 22, die zwei Druckluftzylinder 23,24 mit durch Zuführung von Druckluft aus der besagten Druckluftquelle über Druckluftleitungen 25,26 ausfahrbaren Kolbenstangen 27,28 und Abstützflächen 29,30 an den Kolbenstangenenden sowie mit in den Druckluftzylindern 23,24 vorgesehenen Federmitteln 31,32 zum Einziehen der Kolbenstangen 27,28 bei Ablassen der Druckluft umfassen.

Bei einem Verfahren zum Abdichten einer Einmündungsstelle einer für Flüssigkeiten vorgesehenen Rohrleitung in eine Sammelrohrleitung unter Verwendung der in Fig. 1 gezeigten Einrichtung ergibt sich folgende Wirkungsweise der Einrichtung 1:
Zu Verfahrensbeginn wird an das Frontteil 33, das vorn an dem Abdichtmittelbehälter 6 und über den Drehtisch 14 an dem Transportwagen 5 angebracht ist, eine neue Schalung 10 mit Druckluftzylindern 23,24 und einem im folgenden noch zu erläuternden Kopplungsorgan 34 angebracht, indem die Schalung 10 mit ihren Tragorganen 20,21 auf die Stangen 16 der mit dem Frontteil 33 über die Kolbenstange 17 verbundenen Gabel 15 aufgesteckt wird und das Kopplungsorgan 34 an das Frontteil 33 angekoppelt wird. Danach wird die Einrichtung 1 zusammen mit der daran angebrachten neuen Schalung 10 an einer Eintrittsstelle in die Sammelrohrleitung 4 eingesetzt und dann mittels des Transportwagens 5 innerhalb der Sammelrohrleitung 4 in Richtung der abzudichtenden Einmündungsstelle 2 des einmündenden Rohres 3 bewegt. Die Fortbewegung des Transportwagens 5 wird wie üblich über ein in der Zeichnung nicht gezeigtes Kabel zwischen dem Transportwagen 5 und einer in der Zeichnung ebenfalls nicht gezeigten Fernsteuerstelle ferngesteuert. Das Kabel kann im Falle, dass die Einrichtung 1 nicht mit einer eigenen, mit der Einrichtung 1 mitbewegten Druckluftquelle versehen ist, eine Druckluftleitung umfassen, wobei dann die Druckluftquelle an der Fernsteuerstelle anzuordnen ist. Die Fortbewegung des Transportwagens 5 erfolgt mit einem auf die Räder des Transportwagens 5 wirkenden Elektromotor, dem von der Fernsteuerstelle über in dem Kabel verlaufende Stromleitungen Strom zugeführt wird. Mittels einer an der Einrichtung 1 angebrachten Videokamera, die über das Kabel mit einem an der Fernsteuerstelle stehenden Monitor verbunden ist, wird nun während der Fortbewegung des Transportwagens 5 in der Sammelrohrleitung 4 die Sammelrohrinnenwand 22 am Bildschirm des Monitors betrachtet, bis die abzudichtende Einmündungsstelle der Rohrleitung 3 aufgefunden worden ist. Danach wird durch langsame Vorwärts- und/oder Rückwärtsbewegung des Transportwagens 5 die Schalung 10 am richtigen Ort vor der Einmündungsstelle 2 des in die Sammelrohrleitung 4 einmündenden Rohres 3 ferngesteuert in Achsrichtung der Sammelrohrleitung 4 in Position gebracht. Anschliessend wird die Schalung 10 durch Drehen des Drehtisches 14 in der richtigen Winkellage vor der abzudichtenden Einmündungsstelle 2 in Position gebracht, und danach erfolgt die endgültige Positionierung der Schalung 10 an der Einmündungsstelle 2 durch Bewegung der Schalung 10 quer zur Achsrichtung der Sammelrohrleitung 4 mittels des Druckluftzylinders 13. Sobald diese endgültige Positionierung abgeschlossen ist, wird den Druckluftzylindern 23,24 über die Druckluftleitungen 25,26 und das steuerbare Rückschlagventil 35 sowie das Kopplungsorgan 34 von der besagten Druckluftquelle Druckluft zugeführt. Dadurch werden die Kolbenstangen 27,28, die zuvor aufgrund der Federkraft der Federn 31,32 in die Druckluftzylinder 23,24 eingezogen waren, ausgefahren, bis sie sich mit den an ihren Kolbenstangenenden befindlichen Abstützflächen 29,30 gegebenenfalls über an den Kolbenstangenenden angebrachte Gummipuffer an der Sammelrohrinnenwand 22 abstützen und damit die Schalung 10 an die Sammelrohrinnenwand 22 in der Umgebung der abzudichtenden Einmündungsstelle 2 fest andrücken. Die Schalung 10 befindet sich nunmehr in der in Fig. 1 gezeigten Position, in der sie eine Entfernung des anschliessend zuzuführenden Abdichtmittels 8 von der abzudichtenden Stelle 2 in Richtung des Sammelrohrinnern 9 verhindert. Danach wird die zuvor nicht aufgeblasene Blase 11, die an dem Rand des Loches 36 in der Schalung 10 befestigt ist, durch Zuführung von Druckluft aus der besagten Druckluftquelle über das Kopplungsorgan 34 und das steuerbare Rückschlagventil 37 sowie die Druckluftleitung 38 aufgeblasen, bis sie etwa die in Fig. 1 gezeigte Form erreicht hat, was jedenfalls bezüglich des in das Sammelrohrinnere 9 hineinragenden Teil der Blase 11 mittels der besagten Videokamera leicht beobachtbar ist. In diesem Zustand verhindert die Blase 11 eine Entfernung des anschliessend zuzuführenden Abdichtmittels 8 von der abzudichtenden Stelle 2 in Richtung des Innern 12 des einmündenden Rohres 3. Nunmehr wird aus dem Abdichtmittelbehälter 6, der je eine Kammer für jede der beiden Komponenten des als Abdichtmittel benutzten Zweikomponenten-Epoxidharzes und eine integrierte Mischeinrichtung zum Mischen der beiden Komponenten aufweist, über das Kupplungsorgan 34 und die Schläuche 7 sowie die Zuführungsöffnungen 39 in der Schalung 10 Abdichtmittel 8 zu dem einerseits von der Schalung 10 und andererseits von der Blase 11 begrenzten Hohlraum unter einem Druck von mehreren Bar, der zum grossen Teil über den Zuführungsöffnungen 39 abfällt, zugeführt, bis der Hohlraum vollständig mit Abdichtmittel 8 gefüllt ist. Dabei können zweckmässig in der Schalung 10 weitere Oeffnungen von sehr geringer Oeffnungsweite vorgesehen sein, über die Luft aus dem Hohlraum entweichen kann. Sobald nun der Hohlraum im wesentlichen ausgefüllt ist und der Zufluss von Abdichtmittel 8 über die Zuführungsöffnungen 39 allmählich versiegt, verringert sich auch der Druckabfall über den Zuführungsöffnungen 39, so dass der Druck des Abdichtmittels 8 in dem Hohlraum ansteigt und dadurch dann aus den besagten Luftablassöffnungen Abdichtmittel 8 herausgerückt wird, was mit der Videokamera beobachtbar ist. Nach diesem Anzeichen für eine im wesentlichen vollständige Ausfüllung des Hohlraumes wird die Zufuhr von Abdichtmittel 8 beendet. Damit fällt auch der Druck des Abdichtmittels 8 in dem Hohlraum kurzfristig wieder ab, und danach kann weder über die besagten Luftablassöffnungen noch über die Zuführungsöffnungen 39 von ebenfalls sehr geringer Oeffnungsweite mehr Abdichtmittel 8 aus dem Hohlraum entweichen. Nunmehr wird das Kopplungsorgan 34 von dem Frontteil 33 abgekoppelt und der Transportwagen 5 zurückgefahren, und dabei werden die Stangen 16 aus den Ausnehmungen 18,19 herausgezogen, und das Frontteil 33 löst sich von dem Kopplungsorgan 34. Die Schalung 10 mit den Druckluftzylindern 23,24 und der Blase 11 sowie den Druckluftleitungen 25,26 und 38 und den Schläuchen 7 sowie dem Kopplungsorgan 34 verbleibt nun an der abzudichtenden Einmündungsstelle des Rohres 3 mindestens über die für das Aushärten des Abdichtmittels 8 in dem Hohlraum erforderliche Zeitdauer, während der Transportwagen 5 mit dem Abdichtmittelbehälter 6 und dem Frontteil 33 zu der besagten Eintrittsstelle zurückkehrt, wo eine neue Schalung 10 an der Einrichtung 1 angebracht wird. Zu Beginn der besagten Aushärtzeit läuft das noch in den Schläuchen 7 befindliche, noch flüssige Abdichtmittel über das abgekoppelte Kopplungsorgan 34 allmählich ab, da die Schläuche 7 im Gegensatz zu den Zuführungsöffnungen 39 und den besagten Luftablassöffnungen in der Schalung 10 eine relativ grosse Oeffnungsweite haben und daher diesen allmählichen Abfluss des Abdichtmittels ermöglichen. Die an der genannten Eintrittsstelle mit der neuen Schalung 10 versehene Einrichtung 1 fährt nunmehr zu einer zweiten abzudichtenden Einmündungsstelle, die von der Eintrittsstelle weniger weit entfernt ist, als die zuvor abgedichtete erste Einmündungsstelle. Dort wird der gleiche Vorgang wie bei der ersten Einmündungsstelle wiederholt, und das Ganze wiederholt sich dann an jeder weiteren abzudichtenden Einmündungsstelle, wobei am Anfang mit der am weitesten von der besagten Eintrittsstelle entfernten Einmündungsstelle begonnen wird und nach und nach die immer näher an der Eintrittsstelle liegenden Einmündungsstellen abgedichtet werden. Wenn sämtliche Einmündungsstellen abgedichtet sind, befindet sich an jeder dieser Einmündungsstellen eine Schalung 10 und das Abdichtmittel ist an jeder dieser Einmündungsstellen ausgehärtet. Danach werden die Schalungen 10 der Reihe nach, beginnend mit der der Eintrittsstelle am nächsten gelegenen abgedichteten Einmündungsstelle, von der Einrichtung 1 wieder abgeholt. Dieser Abholvorgang erfolgt in der Weise, dass der Transportwagen 5 mit dem Abdichtmittelbehälter 6 und dem Frontteil 33 zu der an der abgedichteten Einmündungsstelle befindlichen Schalung 10 bewegt wird, bis die Stangen 16 in die Ausnehmungen 18,19 eingeführt sind, dass danach das Kopplungsorgan 34 wieder an das Frontteil 33 angekoppelt wird und anschliessend die steuerbaren Rückschlagventile 35 und 37 über das Kopplungsorgan 34 geöffnet werden, so dass die Kolbenstangen 27,28 mittels der Federn 31 und 32 wieder in die Druckzylinder 23,24 eingezogen werden und die Luft aus der Blase 11 entweicht und die Blase 11 sich dadurch wieder zusammenzieht. Danach wird die Kolbenstange 17 wieder in den Druckluftzylinder 13 eingezogen, wodurch sich die Schalung 10 von der abgedichteten Einmündungsstelle 2 löst und in Richtung auf die Mitte der Sammelrohrleitung zu bewegt, und dann wird die Einrichtung 1 mit der Schalung 10 wieder zu der Eintrittsstelle zurückbewegt und dort die Schalung 10 von der Einrichtung 1 abgenommen, und dieser Vorgang wird solange wiederholt, bis die letzte Schalung 10 wieder zu der Eintrittsstelle zurückgeholt worden ist.

## Patentansprüche

1. Abdichteinrichtung (1) zum Abdichten einer reparaturbedürftigen Einmündungsstelle (2) einer für Flüssigkeiten vorgesehenen Rohrleitung (3) in eine Sammelrohrleitung (4) mit einem in der Sammelrohrleitung (4) bewegbaren Transportmittel (5) und einem an dem Transportmittel (5) angebrachten Abdichtmittelbehälter (6) sowie mit dem Abdichtmittelbehälter (6) in Verbindung stehenden Mitteln (7) zur Zuführung von Abdichtmittel (8) zu der abzudichtenden Einmündungsstelle (2) und mit einer zum Abdecken der abzudichtenden Stelle (2) vom Sammelrohrinnern (9) her vorgesehenen, zur Verhinderung einer Entfernung des Abdichtmittels (8) von der abzudichtenden Stelle (2) in Richtung des Sammelrohrinnern (9) dienenden Schalung (10), durch die hindurch das Abdichtmittel der abzudichtenden Stelle zugeführt wird, sowie Mitteln (11) zur Verhinderung einer Entfernung des Abdichtmittels (8) von der abzudichtenden Stelle (2) in Richtung des Innern (12) des einmündenden Rohres (3) und Mitteln (5,13,14) zur Positionierung der Schalung (10) vom Sammelrohrinnern (9) her an der abzudichtenden Stelle (2), gekennzeichnet durch Mittel (16-21) zum Abkoppeln der Schalung (10) sowie weiterer bei der Schalung verbleidender Mittel (7, 11, 23-32) nach ihrer Positionierung von den die Transportmittel (5) und die Positionierungsmittel (13,14) umfassenden bewegbaren Mitteln (5,13,14) der Abdichteinrichtung (1) und Mittel (23-32) zum Halten der Schalung (10) in ihrer Position während der Dauer des abgekoppelten Zustandes der Schalung (10), sowie zur Aufhebung der auf die Schalung (10) wirkenden Kraft des der abzudichtenden Stelle zugeführten Abdichtmittels (8) bis zur Verfestigung desselben.

2. Abdichteinrichtung nach Anspruch 1, dadurch gekennzeichnet, dass die bewegbaren Mittel (5,13,14) neben den die Transportmittel (5) und den Abdichtmittelbehälter (6) umfassenden, im wesentlichen in Achsrichtung der Sammelrohrleitung (4) längsbewegbaren Mitteln (5,6) zum Zwecke der Positionierung der Schalung (10) vom Sammelrohrinneren (9) her an der abzudichtenden Stelle (2) an den längsbewegbaren Mitteln (5,6) angebrachte Mittel (13) zur Bewegung der Schalung (10) quer zur Achsrichtung der Sammelrohrleitung (4) und ebenfalls an den längsbewegbaren Mitteln (5,6) angebrachte Mittel (14) zur Bewegung der Schalung (10) in Drehrichtung um die Achse der Sammelrohrleitung (4) und ferner vorzugsweise eine an den längsbewegbaren Mitteln (5,6) angebrachte, mit einem Monitor in einer Fernsteuerstelle in Verbindung stehende Videokamera zum Auffinden der abzudichtenden Einmündungsstelle (2) der Rohrleitung (3) sowie zur richtigen Positionierung der Schalung (10) an dieser Einmündungsstelle (2) umfassen.

3. Abdichteinrichtung nach Anspruch 2, dadurch gekennzeichnet, dass die Mittel (16-21) zum Abkoppeln der Schalung (10) von den bewegbaren Mitteln (5,13,14) mindestens eine an den Mitteln (17) zur Bewegung der Schalung (10) quer zur Achsrichtung der Sammelrohrleitung (4) angebrachte Stange, vorzugsweise zwei zu einer Gabel (15) zusammengefasste Stangen (16), und zur Einführung der Stangen (16) vorgesehene Ausnehmungen (18,19) in mit der Schalung (10) verbundenen Tragorganen (20,21) umfassen.

4. Abdichteinrichtung nach einem der Ansprüche 1 bis 3, dadurch gekennzeichnet, dass die Mittel zum Halten der Schalung (10) in ihrer Position während der Dauer des abgekoppelten Zustandes der Schalung (10) Abstützmittel (23-32) zum Abstützen der Schalung (10) an der Sammelrohrinnenwand (22) umfassen.

5. Abdichteinrichtung nach Anspruch 4, dadurch gekennzeichnet, dass die Abstützmittel mindestens einen, vorzugsweise mehrere Druckluftzylinder (23,24) mit durch Zuführung von Druckluft ausfahrbaren Kolbenstangen (27,28) und Abstützflächen (29,30) an den Kolbenstangenenden sowie in den Druckluftzylindern (23,24) vorgesehenen Federmitteln (31,32) zum Einziehen der Kolbenstangen (27,28) bei Ablassen der Druckluft umfassen.

6. Abdichteinrichtung nach einem der Ansprüche 1 bis 5, dadurch gekennzeichnet, dass die die Transportmittel (5) und die Positionierungsmittel (13,14) umfassenden bewegbaren Mittel (5,13,14) weiter eine Druckluftquelle umfassen.

7. Abdichteinrichtung nach den Ansprüchen 5 und 6, dadurch gekennzeichnet, dass Mittel (25,26) zur Zuführung von Druckluft von der Druckluftquelle zu den Druckluftzylindern (23,24) vorgesehen sind und diese Mittel zur Zuführung von Druckluft zu den Druckluftzylindern (23,24) von den bewegbaren Mitteln (5,13,14) abkoppelbare, mit den Druckluftzylindern (23,24) fest in Verbindung stehende Druckluftzuführungsmittel (25,26) umfassen.

8. Abdichteinrichtung nach einem der Ansprüche 1 bis 7, dadurch gekennzeichnet, dass die Mittel zur Verhinderung einer Entfernung des Abdichtmittels (8) von der abzudichtenden Stelle in Richtung des Inneren (12) des einmündenden Rohres (3) eine in das einmündende Rohr (3) einführbare und anschliessend aufblasbare Blase (11), vorzugsweise eine im aufgeblasenen Zustand die äussere Form eines dickwandigen Zylinders aufweisende, einen Flüssigkeitsdurchfluss von der Rohrleitung in die Sammelrohrleitung (4) erlaubende Ringblase, und Mittel (34,37,38) zur Zuführung von Druckluft zu der Blase (11) umfassen.

9. Abdichteinrichtung nach den Ansprüchen 6 und 8, dadurch gekennzeichnet, dass Mittel (34,37,38) zur Zuführung zu von Druckluft von der Druckluftquelle zu der Blase (11) vorgesehen sind und diese Mittel (34,37,38) zur Zuführung von Druckluft zu der Blase (11) von den bewegbaren Mitteln (5,13,14) abkoppelbare, mit der Blase (11) fest in Verbindung stehende Druckluftzuführungsmittel (38) umfassen.

10. Abdichteinrichtung nach einem der Ansprüche 1 bis 9, dadurch gekennzeichnet, dass die mit dem Abdichtmittelbehälter (6) in Verbindung stehenden Mittel (7,34) zur Zuführung von Abdichtmittel (8) zu der abzudichtenden Einmündungsstelle (2) von den bewegbaren Mitteln (5,13,14) abkoppelbare, mit der Schalung (10) fest in Verbindung stehende Zuführungsmittel (7) umfassen.

11. Abdichteinrichtung nach den Ansprüchen 7, 9 und 10, dadurch gekennzeichnet, dass die von den bewegbaren Mitteln (5,13,14) abkoppelbaren, mit dem Druckluftzylinder (23,24) fest in Verbindung stehenden Druckluftzuführungsmittel (25,26) und die von den bewegbaren Mitteln (5,13,14) abkoppelbaren, mit der Blase (11) fest in Verbindung stehenden Druckluftzuführungsmittel (38) und die von den bewegbaren Mitteln (5,13,14) abkoppelbaren mit der Schalung (10) fest in Verbindung stehenden, für das Abdichtmittel (8) vorgesehenen Zuführungsmittel (7) an ihren von dem Druckluftzylinder (23,24) bzw. der Blase (11) bzw. der Schalung (10) abgewandten Enden mit einem gemeinsamen Kopplungsorgan (34) verbunden sind, das an die die Transportmittel (5), den Abdichtmittelbehälter (6) und die Druckluftquelle umfassenden, im wesentlichen in Achsrichtung der Sammelrohrleitung (4) längsbewegbaren Mittel (5,13,14,33) ankoppelbar ist und über das der Druckluftzylinder (23,24) und die Blase (11) mit der Druckluftquelle und die mit der Schalung (10) fest in Verbindung stehenden, für das Abdichtmittel vorgesehenen Zuführungsmittel (7) mit dem Abdichtmittelbehälter (6) verbindbar sind.

12. Verfahren zum Abdichten einer Einmündungsstelle (2) einer für Flüssigkeiten vorgesehenen Rohrleitung (3) in eine Sammelrohrleitung (4) unter Verwendung einer Abdichteinrichtung (1) nach Anspruch 1.

## Claims

1. A sealing device (1) for sealing a junction point (2), in need of repair, into a collecting pipe conduit (4) of a pipe conduit (3) which is provided for liquids, having a transport means (5) which is movable in the collecting pipe conduit (4) and a sealing means container (6) mounted on the transport means (5) and means (7) in connection with the sealing means container (6), for supplying sealing means (8) to the junction point (2) to be sealed, and having an encasing (10) which is provided for covering the point (2) to be sealed from the inside (9) of the collecting pipe and serves to prevent removal of the sealing means (8) from the point (2) to be sealed in the direction of the inside (9) of the collecting pipe, the sealing means of the point to be sealed being supplied through said encasing (10), and means (11) for preventing removal of the sealing means (8) from the point (2) to be sealed in the direction of the inside (12) of the joining pipe (3) and means (5, 13, 14) for positioning the encasing (10) from the inside (9) of the collecting pipe at the point (2) to be sealed, characterized by means (16 - 21) for uncoupling the encasing (10) and of further means (7, 11; 23 - 32) remaining at the encasing after its positioning of the movable means (5, 13, 14), which include the transport means (5) and the positioning means (13, 14), of the sealing device (1) and means (23 - 32) for holding the encasing (10) in its position for the duration of the uncoupled state of the encasing (10) and for countering the force, which acts on the encasing (10), of the sealing means (8) supplied to the point to be seated until said sealing means (8) has set.

2. A sealing device according to Claim 1, characterized in that the movable means (5, 13, 14) include, in addition to the means (5, 6) which include the transport means (5) and the sealing means container (6) and are longitudinally movable substantially in the axial direction of the collecting pipe conduit (4), for the purpose of positioning the encasing (10) from the inside (9) of the collecting pipe at the point (2) to be sealed, means (13) mounted on the longitudinally movable means (5, 6) for moving the encasing (10) transversely with respect to the axial direction of the collecting pipe conduit (4) and likewise means (14) mounted on the longitudinally movable means (5, 6), for moving the encasing (10) in the direction of rotation about the axis of the collecting pipe conduit (4), and further preferably a video camera which is mounted on the longitudinally movable means (5, 6) and is connected to a monitor at a remote control location for establishing the junction point (2) of the pipe conduit (3) to be sealed and for correctly positioning the encasing (10) at this junction point (2).

3. A sealing device according to Claim 2, characterized in that the means (16 - 21) for uncoupling the encasing (10) from the movable means (5, 13, 14) include at least one rod mounted on the means (17) for moving the encasing (10) transversely with respect to the axial direction of the collecting pipe conduit (4), preferably two rods (16) combined to make a fork (15), and recesses (18, 19) provided for introducing the rods (16) in carrying elements (20, 21) connected to the encasing (10).

4. A sealing device according to one of Claims 1 to 3, characterized in that the means for holding the encasing (10) in its position for the duration of the uncoupled state of the encasing (10) include supporting means (23 - 32) for supporting the encasing (10) against the collecting pipe inner wall (22).

5. A sealing device according to Claim 4, characterized in that the supporting means include at least one, preferably a plurality of compressed air cylinders (23, 24) having piston rods (27, 28) which can be extended by supplying compressed air, and supporting surfaces (29, 30) on the ends of the piston rods and spring means (31, 32) provided in the compressed air cylinders (23, 24) for retracting the piston rods (27, 28) when the compressed air is let off.

6. A sealing device according to one of Claims 1 to 5, characterized in that the movable means (5, 13, 14) which include the transport means (5) and the positioning means (13, 14) further include a compressed air source.

7. A sealing device according to Claims 5 and 6, characterized in that means (25, 26) are provided for supplying compressed air from the compressed air source to the compressed air cylinders (23, 24) and these means for supplying compressed air to the compressed air cylinders (23, 24) include compressed air supplying means (25, 26) which can be uncoupled from the movable means (5, 13, 14) and are fixedly connected to the compressed air cylinders (23, 24).

8. A sealing device according to one of Claims 1 to 7, characterized in that the means for preventing removal of the sealing means (8) from the point to be sealed in the direction of the inside (12) of the joining pipe (3) include a balloon (11) which can be introduced into the joining pipe (3) and subsequently inflated, preferably an annular balloon which, in the inflated state, has the outer form of a thick-walled cylinder and allows a liquid through-flow from the pipe conduit into the collecting pipe conduit (4), and means (34, 37, 38) for supplying compressed air to the balloon (11).

9. A sealing device according to Claims 6 and 8, characterized in that means (34, 37, 38) are provided for supplying compressed air from the compressed air source to the balloon (11) and these means (34, 37, 38) for supplying compressed air to the balloon (11) include compressed air supplying means (38) which can be uncoupled from the movable means (5, 13, 14) and are fixedly connected to the balloon (11).

10. A sealing device according to one of Claims 1 to 9, characterized in that the means (7, 34) connected to the sealing means container (6) for supplying sealing means (8) to the junction point (2) to be sealed include supplying means (7) which can be uncoupled from the movable means (5, 13, 14) and are fixedly connected to the encasing (10).

11. A sealing device according to Claims 7, 9 and 10, characterized in that the compressed air supplying means (25, 26) which can be uncoupled from the movable means (5, 13, 14) and are fixedly connected to the compressed air cylinder (23, 24) and the compressed air supplying means (38) which can be uncoupled from the movable means (5, 13, 14) and are fixedly connected to the balloon (11) and the supplying means (7) which can be uncoupled from the movable means (5, 13, 14) and are fixedly connected to the encasing (10) and are provided for the sealing means (8) are connected at their ends remote from the compressed air cylinder (23, 24) and remote from the balloon (11) and remote from the encasing (10) respectively, to a common coupling element (34) which can be coupled to the means (5, 13, 14, 33) which include the transport means (5), the sealing means container (6) and the compressed air source and are longitudinally movable substantially in the axial direction of the collecting pipe conduit (4), and by way of said coupling element (34) the compressed air cylinder (23, 24) and the balloon (11) having the compressed air source and the supplying means (7) which are fixedly connected to the encasing (10) and are provided for the sealing means can be connected to the sealing means container (6).

12. A process for sealing a junction point (2) into a collecting pipe conduit (4) of a pipe conduit (3) provided for liquids using a sealing device (1) according to Claim 1.

## Revendications

1. Dispositif (1) pour rendre étanche une zone de jonction (2) à réparer d'une conduite (3) prévue pour des liquides dans une conduite principale (4) avec un moyen de transport (5) déplaçable dans la conduite principale (4) et un récipient (6) pour l'agent d'étanchement installé sur le moyen de transport (5), et avec des moyens (7) reliés au récipient (6) pour l'agent d'étanchement pour amener l'agent d'étanchement (8) à la zone de jonction (2) à rendre étanche et avec un coffrage (10) prévu pour couvrir la zone (2) à rendre étanche depuis l'intérieur (9) de la conduite principale, destiné à empêcher un enlèvement de l'agent d'étanchement (8) de la zone (2) à rendre étanche en direction de l'intérieur (9) de la conduite principale, à travers lequel l'agent d'étanchement est amené à la zone à rendre étanche, et avec des moyens (11) pour empêcher un enlèvement de l'agent d'étanchement (8) de la zone (2) à rendre étanche en direction de l'intérieur (12) de la conduite débouchante (3) et des moyens (5, 13, 14) pour positionner le coffrage (10) depuis l'intérieur (9) de la conduite principale à la zone (2) à rendre étanche, caractérisé par des moyens (16-21) pour désaccoupler le coffrage (10) ainsi que par d'autres moyens (7, 11 ; 23-32) restant auprès du coffrage après le positionnement de celui-ci par les moyens mobiles (5, 13, 14) comprenant les moyens de transport (5) et les moyens de positionnement (13, 14) du dispositif d'étanchement (1), et des moyens (23-32) pour tenir le coffrage (10) dans sa position pendant la durée de l'état désaccouplé du coffrage (10) ainsi que pour supprimer la force agissant sur le coffrage (10) de l'agent d'étanchement (8) amené à la zone à rendre étanche jusqu'au durcissement de celui-ci.

2. Dispositif d'étanchement selon la revendication 1, caractérisé en ce que les moyens mobiles (5, 13, 14) à part les moyens (5, 6) comprenant les moyens de transport (5) et le récipient (6) pour l'agent d'étanchement, déplaçables longitudinalement sensiblement dans la direction axiale de la conduite principale (4), pour positionner le coffrage (10) depuis l'intérieur (9) de la conduite principale à la zone à rendre étanche (2) comprennent des moyens (13) fixés aux moyens déplaçables longitudinalement (5, 6) pour déplacer le coffrage (10) transversalement à la direction axiale de la conduite principale (4) et également des moyens (14) fixés aux moyens (5, 6) déplaçables longitudinalement pour déplacer le coffrage (10) dans la direction de rotation autour de l'axe de la conduite principale (4) et en outre, de préférence, une caméra vidéo montée sur les moyens déplaçables longitudinalement (5, 6), reliée à un dispositif de surveillance dans une station de commande à distance pour détecter la zone de jonction (2) à rendre étanche de la conduite (3) ainsi que pour le positionnement correct du coffrage (10) à cette zone de jonction (2).

3. Dispositif d'étanchement selon la revendication 2, caractérisé en ce que les moyens (16-21) pour désaccoupler le coffrage (10) des moyens mobiles (5, 13, 14) comprennent au moins une tige fixée aux moyens (17) pour déplacer le coffrage (10) transversalement à la direction axiale de la conduite principale (4), de préférence deux tiges (16) réunies pour former une fourche (15), et des évidements (18, 19) prévus pour l'insertion des tiges (16) pratiqués dans des organes porteurs (20, 21) reliés au coffrage (10).

4. Dispositif d'étanchement selon l'une des revendications 1 à 3, caractérisé en ce que les moyens pour tenir le coffrage (10) dans sa position pendant la durée de l'état désaccouplé du coffrage (10), comprennent des moyens d'appui (23-32) pour appuyer le coffrage (10) à la paroi intérieure (22) de la conduite principale.

5. Dispositif d'étanchement selon la revendication 4, caractérisé en ce que les moyens d'appui comprennent au moins un, de préférence plusieurs cylindres à air comprimé (23, 24) avec des tiges de piston (27, 28) pouvant être sorties par l'amenée d'air comprimé et des surfaces d'appui(29, 30) aux extrémités des tiges de piston ainsi que des moyens à ressort (31, 32) prévus dans les cylindres à air comprimé (23, 24) pour rentrer les tiges de piston (27, 28) lors de l'évacuation de l'air comprimé.

6. Dispositif d'étanchement selon l'une des revendications 1 à 5, caractérisé en ce que les moyens mobiles (5, 13, 14) comprenant les moyens de transport (5) et les moyens de positionnement (13, 14) comprennent en outre une source d'air comprimé.

7. Dispositif d'étanchement selon les revendications 5 et 6, caractérisé en ce que des moyens (25, 26) sont prévus pour amener l'air comprimé de la source d'air comprimé aux cylindres à air comprimé (23,24) et que ces moyens pour l'amenée d'air comprimé aux cylindres à air comprimé (23, 24) comprennent des moyens d'amenée d'air comprimé (25, 26) pouvant être désaccouplés des moyens mobiles (5, 13, 14) et reliés solidement aux cylindres à air comprimé (23, 24).

8. Dispositif d'étanchement selon l'une des revendications 1 à 7, caractérisé en ce que les moyens pour empêcher un enlèvement de l'agent d'étanchement (8) de la zone à rendre étanche en direction de l'intérieur (12) de la conduite débouchante (3) comprennent une bulle (11) pouvant être insérée dans la conduite débouchante (3) et pouvant être gonflée ensuite, de préférence une bulle annulaire ayant à l'état gonflé, la forme extérieure d'un cylindre à paroi épaisse, permettant un écoulement du liquide de la conduite dans la conduite principale (4), et des moyens (34, 37, 38) pour amener l'air comprimé à la bulle (11).

9. Dispositif d'étanchement selon les revendications 6 et 8, caractérisé en ce que des moyens (34, 37, 38) sont prévus pour amener l'air comprimé de la source d'air comprimé à la bulle (11) et que ces moyens (34, 37, 38) prévus pour amener l'air comprimé à la bulle (11) comprennent des moyens d'amenée d'air comprimé (38) pouvant être désaccouplés des moyens mobiles (5, 13, 14), reliés solidement à la bulle (11).

10. Dispositif d'étanchement selon l'une des revendications 1 à 9, caractérisé en ce que les moyens (7, 34), reliés au récipient (6) pour l'agent d'étanchement, en vue de l'amenée de l'agent d'étanchement (8) à la zone de jonction (2) à rendre étanche, comprennent des moyens d'amenée (7) pouvant être désaccouplés des moyens mobiles (5, 13, 14) et reliés solidement au coffrage (10).

11. Dispositif d'étanchement selon les revendications 7, 9 et 10, caractérisé en ce que les moyens d'amenée d'air comprimé (25, 26) pouvant être désaccouplés des moyens mobiles (5, 13, 14), reliés fixement au cylindre à air comprimé (23, 24) et les moyens d'amenée d'air comprimé (38) pouvant être désaccouplés des moyens mobiles (5, 13, 14), reliés solidement à la bulle (11), et les moyens d'amenée (7) pouvant être désaccouplés des moyens mobiles (5, 13, 14), reliés solidement au coffrage (10), prévus pour l'agent d'étanchement (8) sont reliés à leurs extrémités éloignées du cylindre à air comprimé (23, 24) et, respectivement, de la bulle (11) et, respectivement, du coffrage (10) à un organe d'accouplement commun (34) qui peut être accouplé aux moyens (5, 13, 14, 33) comprenant les moyens de transport (5), le récipient (6) pour l'agent d'étanchement et la source d'air comprimé, déplaçables longitudinalement sensiblement dans la direction axiale de la conduite principale (4) et par lequel le cylindre à air comprimé (23, 24) et la bulle (11) avec la source d'air comprimé et les moyens d'amenée (7) reliés solidement au coffrage (10), prévus pour l'agent d'étanchement peuvent être reliés au récipient (6) prévu pour l'agent d'étanchement.

12. Procédé pour rendre étanche une zone de jonction (2) d'une conduite (3) prévue pour des liquides dans une conduite principale (4) en utilisant un dispositif d'étanchement (1) selon la revendication 1.
